(19) Europäisches Patentamt
European Patent Office
Office européen des brevets

(11) Veröffentlichungsnummer: **0 137 389**
**B1**

(12) **EUROPÄISCHE PATENTSCHRIFT**

(45) Veröffentlichungstag der Patentschrift: **01.06.88**

(51) Int. Cl.⁴: **C 07 F 15/00**, C 07 F 17/00, C 08 F 4/80, C 08 F 10/00

(21) Anmeldenummer: **84111315.2**

(22) Anmeldetag: **22.09.84**

(54) **Organische Nickel-Verbindungen, deren Herstellung und Verwendung als Katalysatoren bei der Polymerisation von Olefinen.**

(30) Priorität: **07.10.83 DE 3336500**

(43) Veröffentlichungstag der Anmeldung: **17.04.85 Patentblatt 85/16**

(45) Bekanntmachung des Hinweises auf die Patenterteilung: **01.06.88 Patentblatt 88/22**

(84) Benannte Vertragsstaaten: **DE FR GB IT NL**

(56) Entgegenhaltungen:
**EP - A - 0 101 927**
**DE - A - 2 923 206**

(73) Patentinhaber: **BAYER AG, Konzernverwaltung RP Patentabteilung, D-5090 Leverkusen 1 Bayerwerk (DE)**

(72) Erfinder: **Ostoja Starzewski, Karl-Heinz A., Dr., Jeschtzenweg 10, D-6368 Bad Vilbel (DE)**
Erfinder: **Witte, Josef, Dr., Haferkamp 10, D-5000 Köln 80 (DE)**
Erfinder: **Bartl, Herbert, Dr., Eichendorffweg 10, D-5068 Odenthal (DE)**

**EP 0 137 389 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Nickel-Verbindungen, die durch Reaktion einer Nickel-(O)-Verbindung oder einer Nickelverbindung, die in situ in eine Nickel-(O)-Verbindung überführt werden kann, mit einem Addukt oder einem Gemisch aus einer chinoiden Verbindung und einem tertiären Phosphin und mit einer Verbindung der Formel (I)

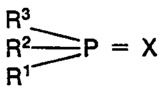 (I)

sowie deren Verwendung als Katalysatoren bei der Polymerisation von Olefinen.

Aus der deutschen Offenlegungsschrift 2 923 206 ist ein Verfahren zur Herstellung von Polyethylenwachsen bekannt, das dadurch gekennzeichnet ist, dass man Ethylen in einem Lösungsmittelgemisch aus einem aromatischen Kohlenwasserstoff und einem hydroxylgruppenhaltigen Solvens bei einer Temperatur von 50 bis 100 °C und einem Druck von 0,7 bis 350 bar Überdruck mit Hilfe eines Katalysators, bestehend aus a) einer nullwertigen Nickelverbindung und b) einem Addukt und/oder Gemisch aus einer chinoiden Verbindung und einem tertiären Phosphin polymerisiert.

Es entsteht ein niedermolekulares Polyethylen, die Katalysatoraktivität ist gering, und das Verfahren ist in der Lösungsmittelauswahl sehr beschränkt.

Es wurde nun überraschenderweise gefunden, dass man mit bestimmten neuen Nickelkatalysatoren diese Nachteile überwinden kann und gezielt Polyolefinwachse, und mittel-, hoch- und ultrahochmolekulare Polyolefinkunststoffe erzeugen kann.

Gegenstand der Erfindung sind demgemäss Nickel-Verbindungen, die durch Reaktion einer Nickel-(O)-Verbindung oder einer Nickelverbindung, die in situ in eine Nickel-(O)-Verbindung überführt werden kann mit einem Addukt oder einem Gemisch aus einer chinoiden Verbindung und einem tertiären Phosphin und mit einer Verbindung der Formel (I)

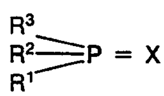 (I)

in der

$R^1$, $R^2$ und $R^3$ unabhängig voneinander gegebenenfalls durch Halogen, Hydroxi, $C_1$–$C_{20}$-Alkoxi, Nitro oder $C_6$–$C_{12}$-Aryloxi substituiertes $C_1$–$C_{20}$-Alkyl, $C_2$–$C_{20}$-Alkenyl, $C_6$–$C_{12}$-Aryl oder $C_3$–$C_8$-Cycloalkyl, ferner $C_6$–$C_{12}$-Aryl-$C_1$–$C_{20}$-alkyl, $C_1$–$C_{20}$-Alkyl-$C_6$–$C_{12}$-aryl, $C_6$–$C_{12}$-Aryl-$C_2$–$C_{20}$-alkenyl, $C_1$–$C_{20}$-Alkyl-$C_3$–$C_8$-cycloalkyl und $C_6$–$C_{12}$-Aryl-$C_3$–$C_8$-cycloalkyl, Di-$C_1$–$C_4$-alkylamino, gegebenenfalls substituiertes Phenoxi oder Alkoxi

$R^4$, $R^5$ und $R^6$ Wasserstoff, Silyl, Halogen, Cyano oder $R^1$ und

X O, $NR^4$ oder

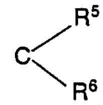

bedeuten,

bei 0–100 °C unter Ausschluss von Sauerstoff herstellbar sind.

Geeignete tertiäre Phosphine entsprechen der Formel (II)

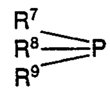 (II)

worin

$R^7$, $R^8$ und $R^9$ unabhängig voneinander, gegebenenfalls durch Halogen, Hydroxi, $C_1$–$C_{20}$-Alkoxi oder $C_6$–$C_{12}$-Aryloxi substituiertes $C_1$–$C_{20}$-Alkyl, $C_6$–$C_{12}$-Aryl, $C_2$–$C_{30}$-Alkenyl oder $C_3$–$C_8$-Cycloalkyl, ferner $C_6$–$C_{12}$-Aryl-$C_1$–$C_{20}$-alkyl, $C_1$–$C_{20}$-Alkyl-$C_6$–$C_{12}$-aryl, Halogen, Hydroxi, $C_1$–$C_{20}$-Alkoxi oder $C_6$–$C_{12}$-Aryloxi bedeuten.

Als chinoide Verbindungen kommen o- oder p-chinoide Verbindungen der Benzol- und Naphthalinreihe sowie Anthrachinone in Frage, die noch substituiert sein können.

Beispielhaft seien p-Benzochinon, Chloranil, 1,4-Naphthochinon und 9,10-Anthrachinon genannt.

Bevorzugte Reste $R^1$, $R^2$ und $R^3$ sind $C_1$–$C_6$-Alkyl, Cyclohexyl, Phenyl, Tolyl, Benzyl, Di-$C_1$–$C_4$-alkylamino, Phenoxy und Methoxi.

Bevorzugte Reste $R^4$, $R^5$ und $R^6$ sind Wasserstoff, $C_1$–$C_6$-Alkyl, Phenyl, $C_1$–$C_4$-Alkylphenyl, Chlorphenyl, Nitrophenyl, Trimethylsilyl, Chlor und Cyano.

$R^7$, $R^8$, $R^9$ sind vorzugsweise Cyclohexyl, Phenyl Tolyl, Benzyl, Vinyl und $C_1$–$C_4$-Alkyl.

Als Nickel-(O)-Verbindungen seien beispielhaft $Ni(cyclooctadien)_2$ und $Ni(allyl)_2$ genannt.

Als Nickelverbindungen, die in situ in Nickel(O)-Verbindungen überführt werden können seien beispielsweise aufgeführt: Ni-acetylacetonat, Nioctanoat und Ni-stearat angeführt, die mit Hilfe von üblichen Reduktionsmitteln wie Boranat, Alanat, Aluminiumalkylen oder Lithiumorganylen reduziert werden können.

Die erfindungsgemässen Nickel-Verbindungen stehen nach den vorliegenden Erkenntnissen mit der Formel (III)

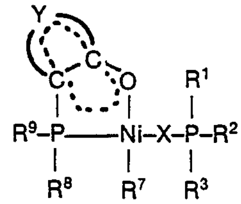 (III)

worin $R^1$, $R^2$, $R^3$, $R^7$, $R^8$, $R^9$ und X die vorstehend genannte Bedeutung besitzen und Y für die restlichen Glieder eines hydroxisubstituierten aromatischen Systems steht, in Einklang.

Bevorzugt werden pro Mol Nickel-(O)-Verbindung je 1–4 Mole der chinoiden Verbindung und des tertiären Phosphins und 1–4 Mole der Verbindung der Formel (I) eingesetzt, besonders bevorzugt pro Mol der Nickel-(O)-Verbindung 1 Mol chinoide Verbindung, sowie tertiäres Phosphin und 1 Mol der Verbindung der Formel (I).

Die Umsetzungstemperatur beträgt 0–100 °C, insbesondere 20–70 °C.

Die Reaktion wird unter Ausschluss von Sauerstoff, vorzugsweise in einem Lösungsmittel das gegenüber den Reaktanden inert sein muss, wie Benzol, Toluol, Cyclohexan und n-Hexan, durchgeführt.

Nach Beendigung der Reaktion wird der Katalysator gewöhnlich ohne Isolierung direkt zur Polymerisation von Olefinen eingesetzt. Das Reaktionsgemisch kann auch filtriert werden, wobei das Filtrat, das den Katalysator enthält, zur Polymerisation eingesetzt werden kann. Der Katalysator kann auch durch Einengen der Reaktionsmischung oder durch Einengen und/oder Abkühlen des Filtrates isoliert werden.

Es ist auch möglich, den Katalysator in Anwesenheit der zu polymerisierenden Olefine herzustellen.

Die erfindungsgemässen Verbindungen sind gut transportierbar, gut dosierbar, und in einer Vielzahl von Lösungsmittel katalytisch wirksam und in weitem Temperaturbereich und in weitem Druckbereich aktiv.

Ein weiterer Gegenstand der Erfindung ist die Verwendung der erfindungsgemässen Nickel-Verbindungen als Katalysatoren bei der Polymerisation von Olefinen, insbesondere von Ethen.

Die Menge der verwendeten Nickel-Verbindung ist nicht kritisch. Typische Katalysatorkonzentrationen liegen zwischen $10^{-2}$ bis $10^{-4}$ Mol pro Liter. Die Menge an Katalysator, bezogen auf Ethen, liegt im Bereich von 0,005 bis 10 Gewichtsprozent, vorzugsweise 0,01 bis 0,1 Gewichtsprozent.

Für die Polymerisation von Olefinen mit den erfindungsgemässen Katalysatoren eignen sich folgende Verfahrensweisen:

a) Vorlegen des festen, gelösten oder suspendierten Katalysators (oder seiner Komponenten), Zugabe des Olefins, dann Aufheizen

b) Vorlegen des Olefins, Injektion der Katalysator-Lösung bzw. -Suspension (oder seiner Komponenten)

c) kontinuierliches Dosieren der Katalysator-Lösung oder -Suspension (oder seiner Komponenten) bei vorgegebenen gewünschten Polymerisations-Bedingungen (Druck, Temperatur) zum Olefin.

Die Polymerisation kann in einem Lösungs- bzw. Verdünnungsmittel bzw. Suspensionsmittel durchgeführt werden, wobei beispielsweise Aliphaten wie n-Hexan, Cyclohexan, Aromaten wie Benzol, Toluol, Xylol, Ketone wie Aceton, Methylethylketon, Ester wie Essigsäureethylester, Säureamide wie Dimethylformamid und Ether wie Tetrahydrofuran in Frage kommen.

Die Polymerisation kann sowohl kontinuierlich als auch diskontinuierlich durchgeführt werden.

Die Polymerisationstemperatur beträgt bevorzugt 20 bis 200 °C, insbesondere von 60 bis 130 °C. Der anzuwendende Olefindruck beträgt mindestens 1 bar, bevorzugt sind 5 bis 1000 bar.

Beispiel 1

Der erfindungsgemässe Katalysator aus 2 mmol Bis-cyclooctadien-nickel-(O), aus 2 mmol des Triphenylphosphin- p-Benzochinon-Adduktes und aus 2 mmol der Komponente I der nachstehenden Tabelle in 50 ml Toluol wird in den vorbereiteten Autoklaven injiziert, der 1 l Lösungsmittel enthält. Nach 1 bis 3 Stunden Polymerisationszeit lässt man abkühlen, entspannt den Autoklaven, und isoliert das feste Polyethylen durch Filtration. Das Filtrat wird gaschromatographisch untersucht. Nach Entfernen des Lösungsmittels im Rotationsverdampfer lässt sich die Menge der Oligomeren auswiegen. Die niedrigsiedenden Anteile sind daher in den angegebenen Ausbeuten (Summe aus Polymeren und Oligomeren) bzw. den berechneten Aktivitäten (mol umgesetztes Ethen pro mol Nickel) nicht berücksichtigt.

Der nachfolgenden Tabelle sind die Reaktionsbedingungen und -ergebnisse zu entnehmen. Dabei bedeuten:

A) Komponente der Formel I
B) Art des Lösungsmittels
C) Ethendruck [bar]
D) Temperatur [°C]
E) Polyethenausbeute (Prozentanteil an Oligomeren)
F) Katalysatoraktivität (mol Ethen pro Mol Ni)
G) Polyethenschmelzpunkt [°C]
H) Grenzviskosität v in Tetralin bei 140 °C [dl/g]
I) Dichte ρ [g/cm³]

Tabelle

| Beispiel | A | B | C | D | E | F | G | H | I |
|---|---|---|---|---|---|---|---|---|---|
| 1 | $(C_6H_5)_3P=O$ | Cyclohexan | 100 | 65–85 | 723 (0) | 12911 | 132 | 9,60 | 0,968 |
| 2 | $(C_6H_5O)_3P=O$ | Cyclohexan | 100 | 60–100 | 965 (0) | 17232 | 135 | 5,85 | 0,960 |
| 3 | $(CH_3)_3P=O$ | Cyclohexan | 100 | 75–80 | 709 (0) | 12661 | 136 | 4,29 | 0,968 |
| 4 | $[(CH_3)_2N]_3P=O$ | Cyclohexan | 100 | 90 | 826 (0) | 14750 | 134 | 2,43 | 0,972 |

| Beispiel | A | B | C | D | E | F | G | H | I |
|---|---|---|---|---|---|---|---|---|---|
| 5 | $(CH_3O)_3-P=O$ | Cyclohexan | 100 | 90–100 | 830 (0) | 14821 | 130 | 1,40 | 0,969 |
| 6 | $(C_6H_5)_3P=N-C(CH_3)_3$ | Cyclohexan | 100 | 100 | 648 (0) | 11571 | 130 | 3,28 | 0,971 |
| 7 | $(C_6H_5)_3P=N-Si(CH_3)_3$ | Cyclohexan | 100 | 90 | 540 (0) | 9643 | 133 | 3,15 | 0,973 |
| 8 | $(C_6H_5)_3P=CH-CH_3$ | Cyclohexan | 100 | 100 | 1143 (0) | 20411 | 129 | 2,14 | 0,966 |
| 9 | $(C_6H_5)_3P=CH-C(CH_3)=CH_2$ | Cyclohexan | 100 | 90–100 | 735 (0) | 13125 | 129 | 1,50 | 0,964 |
| 10 | $(C_6H_5)_3P=CH-CH=CH-C_6H_5$ | Cyclohexan | 100 | 90–100 | 735 (0) | 13125 | 132 | 3,40 | 0,964 |
| 11 | $(C_6H_5)_3P=CH-C_6H_5$ | Cyclohexan | 100 | 90 | 515 (0) | 9196 | 134 | 2,90 | 0,971 |
| 12 | $(C_6H_5)_3P=C(C_6H_5)_2$ | Cyclohexan | 100 | 110–120 | 725 (0) | 12946 | 130 | 1,52 | 0,970 |
| 13 | $(C_6H_5)_3P=CH-CH_3$ | n-Hexan | 100 | 100 | 933 (0) | 17732 | 132 | 1,80 | 0,966 |
| 14 | $(C_6H_5)_3P=CH-CH_3$ | Toluol | 100 | 80–100 | 673 (0) | 12018 | 132 | 2,05 | 0,969 |
| 15 | $(C_6H_5)_3P=CH-CH_3$ | Essigsäure-methylester | 100 | 100 | 915 (0) | 16339 | 122 | 0,21 | 0,945 |
| 16 | $(C_6H_5)_3P=CH-CH_3$ | Aceton | 100 | 100 | 583 (0) | 10411 | 115 | 0,16 | 0,955 |
| 17 | $(C_6H_5)_3P=CH-CH_3$ | Dimethyl-formamid | 100 | 100 | 105 (6) | 1875 | 122 | 0,12 | 0,964 |
| 18 | $(C_6H_5)_3P=CH-CH_3$ | Methanol | 100 | 80 | 455 (4) | 8125 | 79 | 0,02 | – |

**Patentansprüche**

1. Nickel-Verbindungen, die durch Reaktion ener Nickel-(O)-Verbindung oder einer Nickelverbindung, die in situ in eine Nickel-(O)-Verbindung überführt werden kann, mit einem Addukt oder einem Gemisch aus einer chinoiden Verbindung und einem tertiären Phosphin und mit einer Verbindung der Formel (I)

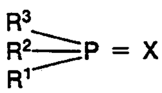 (I)

in der

$R^1$, $R^2$ und $R^3$ unabhängig voneinander gegebenenfalls durch Halogen, Hydroxi, $C_1$–$C_{20}$-Alkoxi, Nitro oder $C_6$–$C_{12}$-Aryloxi substituiertes $C_1$–$C_{20}$-Alkyl, $C_2$–$C_{20}$-Alkenyl, $C_6$–$C_{12}$-Aryl oder $C_3$–$C_8$-Cycloalkyl, ferner $C_6$–$C_{12}$-Aryl-$C_1$–$C_{20}$-alkyl, $C_6$–$C_{12}$-Aryl-$C_2$–$C_{20}$-alkenyl, $C_1$–$C_{20}$-Alkyl-$C_6$–$C_{12}$-aryl, $C_1$–$C_{20}$-Alkyl-$C_3$–$C_8$-cycloalkyl und $C_6$–$C_{12}$-Aryl-$C_3$–$C_8$-cycloalkyl, Di-$C_1$–$C_4$-alkylamino, gegebenenfalls substituiertes Phenoxi oder Alkoxi

$R^4$, $R^5$ und $R^6$ Wasserstoff, Silyl, Halogen, Cyano oder $R^1$ und

X O, $NR^4$ oder

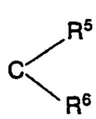

bedeuten,

bei 0–100 °C unter Ausschluss von Sauerstoff herstellbar sind.

2. Verbindungen nach Anspruch 1, wobei

$R^1$, $R^2$ und $R^3$ $C_1$–$C_6$-Alkyl, Cyclohexyl, Phenyl, Tolyl, Benzyl, Di-$C_1$–$C_4$-alkylamino, Phenoxy oder Methoxy

$R^4$, $R^5$ und $R^6$ Wasserstoff, $C_1$–$C_6$-Alkyl, Phenyl, $C_1$–$C_4$-Alkylphenyl, Chlorphenyl, Nitrophenyl, Trimethylsilyl, Chlor und Cyano bedeuten,

das tertiäre Phosphin der Formel (II)

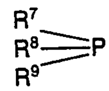 (II)

entspricht, worin

$R^7$, $R^8$, $R^9$ Cyclohexyl, Phenyl, Tolyl, Benzyl, Vinyl und $C_1$–$C_4$-Alkyl bedeuten

und als chinoide Verbindung eine gegebenenfalls substituierte o- oder p-chinoide Verbindung der Benzol- oder Naphthalinreihe oder Anthrachinon eingesetzt werden.

3. Verfahren zur Herstellung von Nickel-Verbindungen gemäss Ansprüchen 1 und 2, dadurch gekennzeichnet, dass man eine Nickel-(O)-Verbindung oder eine Verbindung, die in situ in eine Nickel-(O)-Verbindung überführt werden kann, mit einem Addukt oder einem Gemisch aus einer chinoiden Verbindung und einem tertiären Phosphin und mit einer Verbindung der Formel (I)

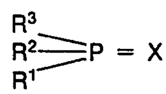 (I)

worin $R^1$, $R^2$, $R^3$ und X die in Anspruch 1 angegebene Bedeutung haben, bei 0–100 °C unter Ausschluss von Sauerstoff, umsetzt.

4. Verfahren nach Anspruch 3, dadurch gekennzeichnet, dass man pro Mol Nickel (O)-Verbindung 1 bis 4 Mole der chinoiden Verbindung, des tertiären Phosphins und der Verbindung (I) einsetzt.

5. Verfahren nach Anspruch 3, dadurch gekennzeichnet, dass man die Umsetzung in einem inerten Lösungsmittel durchführt.

6. Verwendung der Nickelverbindungen gemäss Ansprüchen 1 und 2 als Katalysatoren bei der Polymerisation von Olefinen.

7. Verwendung der Nickelverbindungen gemäss Ansprüchen 1 und 2 als Katalysatoren bei der Polymerisation von Ethen.

**Claims**

1. Nickel compounds which can be prepared by reaction of a nickel(O) compound or a nickel compound which can be converted in situ into a nickel(O) compound, with an adduct or a mixture of a quinoid compound and a tertiary phosphine and with a compound of the formula (I)

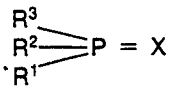 (I)

in which

$R^1$, $R^2$ and $R^3$ independently of one another denote $C_1$–$C_{20}$-alkyl, $C_2$–$C_{20}$-alkenyl, $C_6$–$C_{12}$-aryl or $C_3$–$C_8$-cycloalkyl, each of which is optionally substituted by halogen, hydroxyl, $C_1$–$C_{20}$-alkoxy, nitro or $C_6$–$C_{12}$-aryloxy, furthermore $C_6$–$C_{12}$-aryl-$C_1$–$C_{20}$-alkyl, $C_6$–$C_{12}$-aryl-$C_2$–$C_{20}$-alkenyl, $C_1$–$C_{20}$-alkyl-$C_6$–$C_{12}$-aryl, $C_1$–$C_{20}$-alkyl-$C_3$–$C_8$-cycloalkyl and $C_6$–$C_{12}$-aryl-$C_3$–$C_8$-cycloalkyl, di-$C_1$–$C_4$-alkylamino, or optionally substituted phenoxy or alkoxy

$R^4$, $R^5$ and $R^6$ denote hydrogen, silyl, halogen, cyano or $R^1$ and

X denotes O, $NR^4$ or

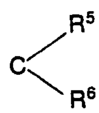

at 0–100 °C with the exclusion of oxygen.

2. Compounds according to Claim 1, in which

$R^1$, $R^2$ and $R^3$ denote $C_1$–$C_6$-alkyl, cyclohexyl, phenyl, tolyl, benzyl, di-$C_1$–$C_4$-alkylamino, phenoxy or methoxy

$R^4$, $R^5$ and $R^6$ denote hydrogen, $C_1$–$C_6$-alkyl, phenyl, $C_1$–$C_4$-alkylphenyl, chlorophenyl, nitrophenyl, trimethylsilyl, chlorine and cyano,

the tertiary phosphine corresponds to the formula (II)

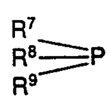 (II)

in which

$R^7$, $R^8$, $R^9$ denote cyclohexyl, phenyl, tolyl, benzyl, vinyl and $C_1$–$C_4$-alkyl

and an optionally substituted o- or p-quinoid compound of the benzene or naphthalene series or anthraquinone is employed as the quinoid compound.

3. Process for the preparation of nickel compounds according to Claims 1 and 2, characterized in that a nickel(O) compound or a compound which can be converted in situ into a nickel(O) compound, is reacted with an adduct or a mixture of a quinoid compound and a tertiary phosphine and with a compound of the formula (I)

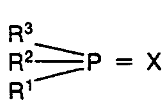 (I)

in which $R^1$, $R^2$, $R^3$ and X have the meaning given in Claim 1, at 0–100 °C with the exclusion of oxygen.

4. Process according to Claim 3, characterized in that 1 to 4 moles of the quinoid compound, the tertiary phosphine and the compound (I) are employed per mole of nickel(O) compound.

5. Process according to Claim 3, characterized in that the reaction is carried out in an inert solvent.

6. Use of the nickel compounds according to Claims 1 and 2 as catalysts in the polymerization of olefins.

7. Use of the nickel compounds according to Claims 1 and 2 as catalysts in the polymerization of ethene.

**Revendications**

1. Composés de nickel, qui peuvent être préparés par réaction, à 0–100 °C à l'abri de l'oxygène, d'un composé de nickel-(O) ou d'un composé de nickel qui peut être transformé in situ en un composé de nickel-(O), avec un produit d'addition ou un mélange d'un composé quinonique et d'une phosphine tertiaire et avec un composé de formule (I)

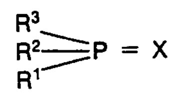 (I)

dans laquelle

$R^1$, $R^2$ et

$R^3$ représentent, indépendamment les uns des autres, un groupe alkyle en $C_1$ à $C_{20}$, alcényle en $C_2$ à $C_{20}$, aryle en $C_6$ à $C_{12}$ ou cycloalkyle en $C_3$ à $C_8$ éventuellement substitué par un radical halogéno, hydroxy, alkoxy en $C_1$ à $C_{20}$, nitro ou aryloxy en $C_6$ à $C_{12}$, en outre un groupe (aryle en $C_6$ à $C_{12}$)-(alkyle en $C_1$ à $C_{20}$), (aryle en $C_6$ à $C_{12}$)-(alcényle en $C_2$ à $C_{20}$), (alkyle en $C_1$ à $C_{20}$)-(aryle en $C_6$ à $C_{12}$), (alkyle en $C_1$ à $C_{20}$)-(cycloalkyle en $C_3$ à $C_8$) et (aryle en $C_6$ à $C_{12}$)-(cycloalkyle en $C_3$ à $C_8$), un groupe di(alkyle en $C_1$ à $C_4$)-amino, un groupe phénoxy ou alkoxy éventuellement substitué,

$R^4$, $R^5$ et

$R^6$ représentent l'hydrogène, un groupe silyle, un halogène, un groupe cyano ou un groupe $R^1$ et

X représente O, $NR^4$ ou

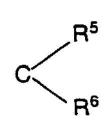 .

2. Composés suivant la revendication 1, dans lesquels

$R^1$, $R^2$ et

$R^3$ représentent un groupe alkyle en $C_1$ à $C_6$, cyclohexyle, phényle, tolyle, benzyle, di-(alkyle en $C_1$ à $C_4$)-amino, phénoxy ou méthoxy

$R^4$, $R^5$ et

$R^6$ représentent l'hydrogène, un groupe alkyle

en $C_1$ à $C_6$, phényle, (alkyle en $C_1$ à $C_4$)-phényle, chlorophényle, nitrophényle, triméthylsilyle, du chlore et un groupe cyano,

la phosphine tertiaire répond à la formule (II)

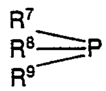 (II)

dans laquelle

$R^7$, $R^8$, $R^9$ représentent les groupes cyclohexyle, phényle, tolyle, benzyle, vinyle et alkyle en $C_1$ à $C_4$,

et on utilise comme composé quinonique, un composé ortho-quinonique ou para-quinonique éventuellement substitué de la série du benzène ou du napthalène ou l'anthraquinone.

3. Procédé de production de composés de nickel suivant les revendications 1 et 2, caractérisé en ce qu'on fait réagir à 0–100 °C à l'abri de l'oxygène un composé de nickel-(O) ou un composé qui peut être transformé in situ en un composé de nickel-(O), avec un produit d'addition ou un mélange d'un composé quinonique et d'une phosphine tertiaire et avec un composé de formule (I)

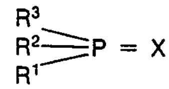 (I)

dans laquelle $R^1$, $R^2$, $R^3$ et X ont la définition indiquée dans la revendication 1.

4. Procédé suivant la revendication 3, caractérisé en ce qu'on utilise par mole de composé de nickel-(O) 1 à 4 moles du composé quinonique, de la phosphine tertiaire et du composé (I).

5. Procédé suivant la revendication 3, caractérisé en ce qu'on conduit la réaction dans un solvant inerte.

6. Utilisation des composés de nickel suivant les revendications 1 et 2 comme catalyseurs dans la polymérisation d'oléfines.

7. Utilisation de composés de nickel suivant les revendications 1 et 2 comme catalyseurs dans la polymérisation d'éthène.